# EUROPÄISCHE PATENTANMELDUNG

(11) **EP 2 546 609 A1**
(43) Veröffentlichungstag der Anmeldung: **16.01.2013**
(21) Anmeldenummer: 12176327.0
(22) Anmeldetag: 13.07.2012
(51) Int. Cl.: G01D 5/14, H01F 7/02, H01F 41/02

(54) **Magnetkodierung und Magnetverdrehsicherung**

(30) Priorität: 14.07.2011 DE 102011107736
(71) Anmelder: Hirschmann Automotive GmbH, 6830 Rankweil-Brederis (AT)
(72) Erfinder: Die Erfindernennung liegt noch nicht vor
(74) Vertreter: Greif, Thomas

(57) **Zusammenfassung**

Magnet (1) für eine Sensoranordnung (S), wobei der Magnet (1) mit einem Magnetfeldsensor (3) der Sensoranordnung (S) zusammenwirkt, dadurch gekennzeichnet, dass der Magnet (1) eine Kodierung aufweist, wobei die Kodierung dazu geeignet und ausgebildet ist, eine vorgegebene Lagepositionierung des Magneten (1) in Bezug auf den Magnetfeldsensor (3) einzuhalten.

## Beschreibung

Die Erfindung betrifft einen Magnet für eine Sensoranordnung, eine Sensoranordnung, sowie ein Verfahren zur Herstellung eines Magneten für eine Sensoranordnung gemäß dem jeweiligen Oberbegriff der unabhängigen Patentansprüche.

Sensoranordnungen mit Magneten, die einen Magnetfeldsensor aufweisen, sind grundsätzlich bekannt. Dabei ist der Magnet an einem bewegbaren Element befestigt oder in diesem integriert, wobei der Magnetfeldsensor ortsfest angeordnet ist und die relative Bewegung des Magneten erfasst, wobei aus der erfassten Relativbewegung ein Signal erzeugt wird, welches die Position des Messobjektes in Bezug auf einen Bezugspunkt angibt. Es ist auch umgekehrt denkbar, dass der Magnet ortsfest und der Magnetfeldsensor bewegbar ausgestaltet sind.

Bei solchen Sensoranordnungen mit Magnetfeldsensoren und Magneten ist es erforderlich, dass der Magnet an dem Messobjekt (oder ortsfest) sicher und in einer definierten Lage, die jeweils abhängig von seiner Relativposition zu dem Magnetfeldsensor ist, eingebaut wird.

Bei vielen bekannten Sensoranordnungen besteht daher die Gefahr, dass diese lagerichtige Anordnung des Magneten in Bezug auf seinen zugehörigen Magnetfeldsensor nicht gegeben ist. Daraus resultieren Messungenauigkeiten, die das Ausgangssignal des Magnetfeldsensors verfälschen oder sogar unbrauchbar machen. Gleiches gilt für den Fall, dass eine polgenaue Ausrichtung des Magneten in Bezug auf den Magnetfeldsensor erforderlich ist. Wird der Magnet nicht polgenau eingebaut, besteht ebenfalls die Gefahr, dass das Ausgangssignal des Magnetfeldsensors verfälscht oder sogar unbrauchbar ist.

Der Erfindung liegt daher die Aufgabe zugrunde, einen Magneten für eine Sensoranordnung, eine gesamte Sensoranordnung, sowie ein Verfahren zur Herstellung eines Magneten für eine Sensoranordnung bereitzustellen, die insgesamt gegenüber dem bekannten Stand der Technik verbessert ist.

Diese Aufgabe ist durch die Merkmale der jeweiligen unabhängigen Patentansprüche gelöst.

Hinsichtlich des Magneten für eine Sensoranordnung ist die Aufgabe erfindungsgemäß dadurch gelöst, dass der Magnet eine Kodierung aufweist, wobei die Kodierung dazu geeignet und ausgebildet ist, eine vorgegebene Lagepositionierung des Magneten in Bezug auf den Magnetfeldsensor einzuhalten. Mit der Kodierung ist es möglich, dass der Magnet lagerichtig in Bezug auf den Magnetfeldsensor an dem Messobjekt angeordnet, integriert, befestigt oder dergleichen wird. Diese Lagepositionierung erfolgt in einer solchen statischen Lage zwischen Magnet und Magnetfeldsensor, wenn der Magnetfeldsensor ortsfest verbaut und das Messobjekt mit dem Magneten nicht bewegt wird. In dieser Lage kann mittels der Kodierung sichergestellt werden, dass der Magnet in vorteilhafter Weise in seiner richtigen Position nicht nur relativ zu dem Magnetfeldsensor, sondern auch an dem Messobjekt, angeordnet werden kann. In vorteilhafter Weise kann der Magnet, insbesondere ein Stabmagnet, mithilfe der Kodierung als optisches Hilfsmittel polgenau verbaut werden. Die Kodierung ist dabei so gewählt, dass sich zumindest die eine Position eines Poles des Magneten anzeigt. Dadurch sind für die Montage des Magneten in vorteilhafter Wiese keine zusätzlichen Hilfsmittel für die Polerkennung nötig. Außerdem hat die Kodierung den Vorteil, dass sie keinen negativen Einfluss auf den Signalverlauf des magnetischen Feldes im Fernfeld hat.

In Weiterbildung der Erfindung ist die Kodierung zumindest eine Aussparung. Eine solche Aussparung hat den Vorteil, dass sie schnell und einfach in den Magneten eingebracht werden kann.

Alternativ oder ergänzend dazu ist weiterhin erfindungsgemäß vorgesehen, dass der Magnet zwecks Kodierung einen ovalen oder nahezu eckigen Querschnitt aufweist. Dies ist insbesondere bei länglichen, stabförmigen Magneten von Vorteil, da somit ebenfalls eine polgenaue Lagepositionierung des Magneten an dem Messobjekt möglich ist. Eine Kodierung kann auch beispielsweise darin gesehen werden, dass ein länglicher Stabmagnet einen sich im axialen Verlauf ändernden Querschnitt aufweist. So kann beispielsweise an dem einen Ende ein Querschnitt vorhanden sein, wohingegen an dem anderen Ende der gleiche Querschnitt, jedoch mit größerer oder kleinerer Querschnittsfläche, vorhanden ist. Ebenso ist es denkbar, dass an dem einen Ende eine erste Querschnittsform vorgesehen ist, wobei an dem anderen Ende eine davon abweichende Querschnittsform mit gleicher, kleinerer oder größerer Querschnittsfläche als an dem anderen Ende vorhanden ist.

In Weiterbildung der Erfindung ist die zumindest eine Kodierung so dimensioniert und angeordnet, dass sie keinen Einfluss auf den Verlauf des Magnetfeldes im Fernfeld, welches von dem Magnetfeldsensor erfasst wird, hat. Dadurch dient die zumindest eine Kodierung beispielsweise als optische Positionierhilfe für den lagerichtigen Einbau. Da jedoch infolge einer solchen Kodierung das eigentlich vorher vorhandene Magnetfeld (also das Magnetfeld ohne Kodierung) verändert wurde, werden der Magnet und der Magnetfeldsensor sowie die Kodierung so dimensioniert und zueinander angeordnet, dass durch die Kodierung zwar das Magnetfeld geändert ist, diese geänderte Feldstärke des Magnetfeldes jedoch keinen, keinen messbaren oder keinen nennenswerten Einfluss auf das Fernfeld, welches von dem Magnetfeldsensor erfasst wird, hat. Das bedeutet, dass sich die Kodierung auf das Ausgangssignal des Magnetfeldsensors nicht oder nur vernachlässigbar auswirkt.

In Weiterbildung der Erfindung ist die Kodierung so dimensioniert und angeordnet, dass eine eindeutige Erkennung eines Poles des Magneten gegeben ist. Das heißt, dass die zumindest eine Kodierung in vorteilhafter Weise ein optisches Hilfsmittel ist, um den Magneten lagerichtig in Bezug auf den Magnetfeldsensor einzubauen.

In Weiterbildung der Erfindung ist der Magnet mit einer Ummantelung umgeben. Es gibt Anwendungsfälle, bei denen der "nackte" Magnet, insbesondere ein Stabmagnet, nicht ohne Schutz eingebaut werden kann. Darüber hinaus gibt es Anwendungsfälle, bei denen Magnet in einem Teil des Messobjektes eingebaut werden muss oder mit Herstellung des Messobjektes schon in diesem integriert wird. In diesen Fällen ist es erforderlich, dass der Magnet mit einer Ummantelung umgeben ist. Auch hier hilft die Kodierung, dass der Magnet eindeutig gehandhabt werden kann, wenn er mit der Ummantelung umgeben wird. Dabei ist es denkbar, dass die Kodierung des Magneten durch die Ummantelung erkennbar ist. Hier kann beispielsweise daran gedacht werden, dass sich die Ummantelung den äußeren Konturen des Magneten einschließlich dessen Kodierung anpasst, sodass auch die Kodierung auf der Oberfläche der Ummantelung, insbesondere ebenfalls wieder in Form einer Aussparung, erkennbar ist.

Weitere Gestaltungen der Ummantelung mit einer sehr großen gestalterischen Freiheit sind gegeben, wenn die Ummantelung von einem Kunststoffspritzgussmaterial gebildet ist. Hierbei wird der Magnet in eine Spritgussform lagerichtig eingelegt, wozu die zumindest eine Kodierung unbedingt erforderlich ist. Sollte sichergestellt sein, dass der Magnet eindeutig in die Spritzgussform eingelegt werden kann, kann gegebenenfalls eine Kodierung auch entfallen. In diesem Fall ist jedoch sicherzustellen, dass dann die Ummantelung eine Kodierung aufweist, die wiederum die lagerichtige Positionierung des dann ummantelten Magnetes relativ zu dem Magnetfeldsensor ermöglicht. Das heißt, dass ein nicht kodierter Magnet durch eine Ummantelung mit einer Kodierung versehen werden kann.

Ein weiterer wesentlicher Vorteil eines Magneten mit einer Kodierung, insbesondere einer Aussparung oder eines über die äußere Oberfläche des Magneten hinausstehenden Vorsprunges ist darin zu sehen, dass eine Lagesicherung des Magneten gegeben ist, wenn er mit der Ummantelung umgeben wird. Im Beispielfalle der Umspritzung mit einem Kunststoffmaterial kann sich dieser insbesondere durch die Temperaturwechsel ("kalter Magnet" und "heißes Kunststoffmaterial") in der Spritzgussform verdrehen. Diese Verdrehung in der Spritzgussform hat einen negativen Einfluss auf die Genauigkeit der gesamten Sensoranordnung. Durch die Kodierung, insbesondere die zumindest eine Aussparung, ist eine Verdrehung des Magnetes innerhalb der Spritzgussform bei Kunststoffumspritzung ausgeschlossen und die Genauigkeit der gesamten Sensoranordnung wird nicht negativ beeinflusst. Diese Kodierungen können einfach oder mehrfach in und/oder auf der Oberfläche des Magneten vorhanden sein. Darüber hinaus können sie symmetrisch (zum Beispiel mehrere Kodierungen hintereinander in axialer oder radialer Ausrichtung, bei spiralförmiger Ausrichtung oder dergleichen) oder asymmetrisch auf der Oberfläche des Magneten vorhanden sein. Besonders bevorzugt sind Aussparungen, da diese in einem Magneten, insbesondere einem Stabmagneten, herstellungstechnisch sehr einfach eingebracht werden können.

Weiterhin ist die Aufgabe durch eine Sensoranordnung gelöst, wobei die Sensoranordnung einen mit einem Magnetfeld zusammenwirkenden Magneten aufweist, und der Magnet wie vorstehend ausgebildet ist, insbesondere zumindest eine Kodierung aufweist.

Gleiches gilt für das Verfahren zur Herstellung eines Magneten für eine Sensoranordnung, wobei zur weiteren Lösung der Aufgabe erfindungsgemäß vorgesehen ist, dass der Magnet mit zumindest einer Kodierung versehen wird, wobei die Kodierung dazu geeignet und ausgebildet ist, eine vorgegebene Lagepositionierung des Magneten in Bezug auf den Magnetfeldsensor einzuhalten. Das heißt, dass der Magnet für die Sensoranordnung so hergestellt wird, dass er anschließend eine Kodierung für die Verdrehsicherung und/oder den polgenauen Einbau aufweist.

In Weiterbildung der Erfindung ist vorgesehen, dass nach der Herstellung der Kodierung der Magnet mit einer Ummantelung, insbesondere mittels eines Kunststoffspritzgussverfahrens, versehen wird. Auch hier ist es von besonderem Vorteil, dass der Magnet die zumindest eine Kodierung (Aussparung oder Vorsprung oder dergleichen, symmetrische oder asymmetrische Anordnung der Kodierungen auf oder in der Oberfläche des Magneten) aufweist. Dadurch wird eine Verdrehsicherung gewährleistet, das heißt, dass sich der Magnet in der Form, wenn er mit Kunststoffmaterial umspritzt wird, infolge von Temperaturwechseln oder anderen Effekten, die zu einer Bewegung des Magneten in der Spritzgussform führen könnten, nicht bewegen kann. Zu diesem Zweck ist die innere Kontur der Spritzgussform so gestaltet, dass sie mit der zumindest einen Kodierung des Magneten zusammenwirkt und diesen lagefixiert während des Spritzgussvorganges. Dies können beispielsweise im Inneren der Spritzgussform nach innen weisende Stege, Pinolen oder dergleichen sein, die mit der Form der Kodierung, insbesondere der Aussparung, des Magneten korrespondieren und diesen in der Form festhalten.

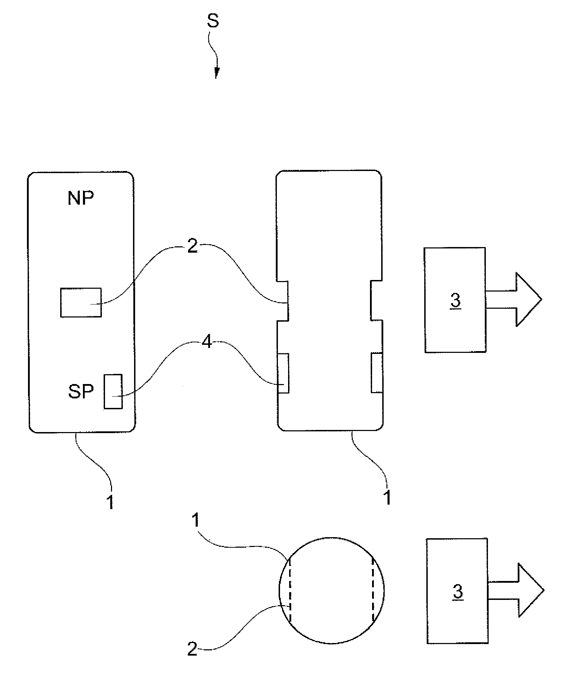

Zur weiteren Erläuterung der Erfindung wird auf die Figur verwiesen, in der, soweit im Einzelnen dargestellt, eine Sensoranordnung S in verschiedenen Darstellungen (oben und unten) dargestellt ist. Die Sensoranordnung S weist einen Magneten 1 auf, der bei diesem Ausführungsbeispiel als länglicher Stabmagnet (Permanentmagnet) mit rundem Querschnitt ausgebildet ist. Der Magnet 1 weist auf seiner Oberfläche als Kodierung zwei gegenüberliegende Aussparungen 2 auf. Der Magnet 1 wirkt mit einem Magnetfeldsensor 3 zusammen, wobei entweder der Magnetfeldsensor 3 ortsfest und der Magnet 1 mit einem Messobjekt relativ dazu bewegbar angeordnet ist oder bei dem der Magnetfeldsensor 3 an dem Messobjekt angeordnet und mit diesem bewegbar ist, wohingegen dann der Magnet 1 ortsfest angeordnet ist.

Für den polgenauen Einbau des Magneten ist die zumindest eine Kodierung, vorzugsweise die Aussparung 2, vorgesehen. Da zwei gegenüberliegende Aussparungen 2 vorhanden sind, ist es möglich, dass der Magnet 1 lagerichtig in Bezug auf den Magnetfeldsensor 3 an oder in dem Messobjekt eingebaut oder angebaut und befestigt werden kann. Alternativ oder ergänzend dazu kann zumindest eine weitere Kodierung, insbesondere wieder eine Aussparung 4, vorgesehen sein. Diese weitere Kodierung, in dem Ausführungsbeispiel die zwei gegenüberliegenden Aussparungen 4, ermöglichen es, dass der Magnet 1 polgenau positioniert werden kann, weil die Lage der zumindest einen Aussparung 4 angibt, dass sich an diesem Ende der Südpol SP befindet, wohingegen an dem anderen Ende des Magneten 1 der Nordpol NP ist. Sind nur die Aussparungen 2 vorhanden, können diese als Verdrehsicherung dienen, wenn der Magnet 1 mit einer Ummantelung (hier nicht gezeigt) versehen ist. Alternativ oder ergänzend dazu können auch die Aussparungen 4 nicht nur als optisches Hilfsmittel zur polgenauen Lagepositionierung des Magneten 1 dienen, sondern alleine oder ergänzend zu den anderen Aussparungen als Verdrehsicherung dienen.

Die Aussparungen 2, 4 in der einzigen Figur sind nur beispielhaft. Es können auch über die axiale Länge des Magneten 1 ein, zwei oder mehr als zwei Aussparungen vorhanden sein, wobei ergänzend oder alternativ dazu auch über den radialen Umfang des Magneten 1 ein, zwei oder mehr als zwei Aussparungen vorhanden sein können. Es bietet sich eine symmetrische Verteilung der jeweiligen Aussparungen auf der Oberfläche des Magneten an, da diese automatisiert besonders einfach herzustellen sind. Schließlich sei noch erwähnt, dass die Kodierung, sei es in Form einer Aussparung, eines Vorsprunges, einer Kombination davon oder anderer Möglichkeiten, entweder schon mit Herstellung des Magneten vorgesehen werden können oder nach der Herstellung des Magneten, zunächst ohne Kodierung nachträglich vorgesehen werden können.

Die erfindungsgemäßen Maßnahmen verbessern dadurch wesentlich eine Sensoranordnung zur Erfassung von Bewegungen eines Messobjektes, welches beispielsweise Drehbewegungen oder lineare Bewegungen ausführt. Denn die Ist-Position des Magneten (oder auch mehrerer Magnete) zu einem Magnetfeldsensor, der beispielsweise als Hall-Sensor, Feldplatte oder XMR-Sensor ausgeführt ist, ist ein charakteristisches Merkmal für magnetfeldbasierte Sensoranordnungen (auch Sensorsysteme genannt). Mithilfe einer als Verdrehsicherung wirkenden Magnetkodierung an Stabmagneten mit elliptischer oder kreisförmiger Querschnittsfläche kann deren Positioniergenauigkeit im applizierten Sensorsystem ohne messbaren Einfluss auf die Fernfeldverteilung des Magneten auch über sensorspezifische Verarbeitungsschritte, wie beispielsweise das Versehen mit einer Ummantelung bzw. ein Umspritzen mit Kunststoffmaterial, quasi konstant gehalten werden.

Die Kodierung des Magneten spielt des Weiteren auch beim polgenauen Verbau von Magneten in magnetfeldbasierten Sensorsystemen eine wichtige Rolle. Die Kodierung kann hier zur Erkennung der Pole des Magneten verwendet werden.

Eine geeignete und besonders vorteilhafte Kodierung entweder mit Verdrehsicherungswirkung und/oder für den polgenauen Verbau im vorstehend beschriebenen Sinn können Aussparungen bei Stabmagneten sein. In vorteilhafter Weise sind die Ausnehmungen in der Mitte des durch die Länge magnetisierten

Magneten angeordnet, können aber auch an anderen Stellen positioniert werden. Die Position und Größe der Aussparungen (oder auch Vorsprünge oder dergleichen) sind so dimensioniert, dass diese keinen Einfluss auf das Ausgangssignal des Magnetfeldsensors, insbesondere auf den Sinus- und Cosinus-Verlauf des magnetischen Feldes im Fernfeld haben.

Der erfindungsgemäß ausgestaltete Magnet hat somit zwei Anwendungen, die entweder jeweils für sich oder in Kombination zu Einsatz kommen.

### Anwendung Verdrehsicherung:

Wird ein Magnet mit einer Ummantelung versehen, insbesondere mit Kunststoff umspritzt, kann sich dieser zum Beispiel durch Temperaturwechsel in der Umspritzung verdrehen. Diese Verdrehung in der Umspritzung (Spritzgussform) hat einen negativen Einfluss auf die Genauigkeit des Sensorsystems. Insbesondere durch die Aussparungen ist eine Verdrehung des Magneten in der Form bei Kunststoffumspritzung ausgeschlossen und die Genauigkeit der Sensoranordnung wird nicht negativ beeinflusst, da das Kunststoffmaterial, mit dem der Magnet umspritzt wird, magnetisch nicht wirksam ist.

### Anwendung Kodierung:

Falls Magnete polgenau, insbesondere im Bezug auf den Magnetfeldsensor, verbaut werden müssen, können diese Aussparungen als optische Hilfsmittel dienen. Beispielhaft kann die Aussparung in der unteren Hälfte des Magneten angeordnet sein und zeigt so die Position des einen Poles, insbesondere des Nordpoles an. Für die Montage wird somit kein zusätzliches Hilfsmittel für die Polerkennung benötigt. Auch hier hat diese zumindest eine Aussparung keinen negativen Einfluss auf das Ausgangssignal des Magnetfeldsensors, insbesondere auf den Sinus- und Cosinus-Verlauf des magnetischen Feldes im Fernfeld.

### Bezugszeichenliste

- 1.: Magnet
- 2.: Aussparung
- 3.: Magnetfeldsensor
- 4.: Aussparung

## Patentansprüche

1. Magnet (1) für eine Sensoranordnung (S), wobei der Magnet (1) mit einem Magnetfeldsensor (3) der Sensoranordnung (S) zusammenwirkt, **dadurch gekennzeichnet, dass** der Magnet (1) eine Kodierung aufweist, wobei die Kodierung dazu geeignet und ausgebildet ist, eine vorgegebene Lagepositionierung des Magneten (1) in Bezug auf den Magnetfeldsensor (3) einzuhalten.

2. Magnet (1) nach Anspruch 1, **dadurch gekennzeichnet, dass** die Kodierung zumindest eine Aussparung (2) ist.

3. Magnet (1) nach Anspruch 1 oder 2, **dadurch gekennzeichnet, dass** zwecks Kodierung der Magnet (1) einen ovalen oder nahezu eckigen Querschnitt aufweist.

4. Magnet (1) nach einem der vorhergehenden Ansprüche, **dadurch gekennzeichnet, dass** die Kodierung so dimensioniert und angeordnet ist, dass sie keinen Einfluss auf den Verlauf des Magnetfeldes im Fernfeld, welches von dem Magnetfeldsensor (3) erfasst wird, hat.

5. Magnet (1) nach einem der vorhergehenden Ansprüche, **dadurch gekennzeichnet, dass** die Kodierung so dimensioniert und angeordnet ist, dass eine eindeutige Erkennung eines Poles des Magneten (1) gegeben ist.

6. Magnet (1) nach einem der vorhergehenden Ansprüche, **dadurch gekennzeichnet, dass** der Magnet (1) mit einer Ummantelung umgeben ist.

7. Magnet (1) nach Anspruch 6, **dadurch gekennzeichnet, dass** die Ummantelung von einem Kunststoffsprüzgussmaterial gebildet ist.

8. Sensoranordnung (S), **dadurch gekennzeichnet, dass** die Sensoranordnung (S) einen mit einem Magnetfeldsensor zusammenwirkenden Magneten (1) nach zumindest einem der vorhergehenden Ansprüche aufweist.

9. Verfahren zur Herstellung eines Magneten (1) für eine Sensoranordnung (S), wobei der Magnet (1) mit einem Magnetfeldsensor (3) der Sensoranordnung (S) zusammenwirkt, **dadurch gekennzeichnet, dass** der Magnet (1) mit zumindest einer Kodierung versehen wird, wobei die Kodierung dazu geeignet und ausgebildet ist, eine vorgegebene Lagepositionierung des Magnetes (1) in Bezug auf den Magnetfeldsensor (3) einzuhalten.

10. Verfahren nach Anspruch 9, **dadurch gekennzeichnet, dass** nach der Herstellung der Kodierung der Magnet (1) mit einer Ummantelung, insbesondere mittels eines Kunststoffspritzgussverfahrens, versehen wird.
